# EUROPEAN PATENT SPECIFICATION

(11) **EP 4 244 710 B1**
(45) Date of publication and mention of the grant of the patent: **04.11.2026**
(21) Application number: 21892611.1
(22) Date of filing: 05.11.2021
(51) Int. Cl.: G06F 3/16, H04R 3/12, H04R 27/04, H04N 21/422, H04S 7/00, H04R 29/00, H04R 1/02

(54) **TRANSMITTING MESSAGES TO A DISPLAY DEVICE BASED ON DETECTED AUDIO OUTPUT**
NACHRICHTENÜBERTRAGUNG AN EINE ANZEIGEVORRICHTUNG AUF BASIS EINER ERKANNTEN AUDIOAUSGABE
TRANSMISSION DE MESSAGES À UN DISPOSITIF D'AFFICHAGE SUR LA BASE D'UNE SORTIE AUDIO DÉTECTÉE

(30) Priority: 13.11.2020 US 202063113628 P; 11.01.2021 US 202117146080
(43) Date of publication of application: 20.09.2023
(73) Proprietor: Roku, Inc., San Jose, CA 95110 (US)
(72) Inventor: DALY, Daniel Martin, San Jose, California 95110 (US)
(74) Representative: Mewburn Ellis LLP
(86) International application number: PCT/US2021/058171
(87) International publication number: WO 2022/103658

(56) References cited:
- KR-A- 20190 038 002
- US-A1- 2012 136 612
- US-A1- 2012 136 612
- US-A1- 2019 020 543
- US-A1- 2019 149 115
- US-A1- 2019 379 887
- US-A1- 2019 379 887
- US-A1- 2020 260 019

## Description

### CROSS-REFERENCE TO RELATED APPLICATIONS

This application claims priority to U.S. Utility Application No: 17/146,080, filed on January 11, 2021, which claims priority to U.S. Provisional Patent Application No: 63/113,628, filed on November 13, 2020

### BACKGROUND

### TECHNICAL FIELD

This disclosure is generally directed to the transmission of messages to a display device based on detected audio input rendered by the display device.

### BACKGROUND

Display devices such as televisions are often connected to digital media players using a High-Definition Media Input (HDMI) connection or other types of communication interfaces. The digital media player may need to determine how to communicate with the display device. For example, display devices may or may not support Consumer Electronics Control (CEC). The digital media player may need to determine whether it can communicate with the display device using CEC. In many use cases, CEC does not provide for adequate feedback from the display device, therefore, normal methods for determining whether a display device is CEC-enabled often require the participation of a user, and are as such undesirable.

US2019/020543A1 discloses system, apparatus, article of manufacture, method and/or computer program product examples, and/or combinations and sub-combinations thereof, for automatically determining the functionality and capabilities of electronic components. Some examples operate by transmitting a command to the display device in question (sometimes called the device under test-DUT-therein) and monitoring the device. Then, it is determined whether an action by the display device was one of a set of proper responses to the command. If the action was proper, then it is determined that the display device supports the command set associated with the command. The command set may be the Consumer Electronics Control (CEC) set, although the disclosure is not limited to that example.

### SUMMARY

Provided herein are system, apparatus, device, method and/or computer program product embodiments, and/or combinations and sub-combinations thereof, for transmitting messages to a display device based on detected audio output rendered by the display device.

According to a first aspect of the present invention there is provided a method as specified in claim 1. The method may optionally be as specified in any of claims 2 to 8.

According to a second aspect of the present invention there is provided a system as specified in claim 9. The system may optionally be as specified in claim 10 or 11.

According to a third aspect of the present invention there is provided a remote control device as specified in claim 12. The remote control device may optionally be as specified in claim 13 or claim 14.

According to a fourth aspect of the present invention there is provided a non-transitory computer-readable medium as specified in claim 15.

### BRIEF DESCRIPTION OF THE DRAWINGS

The accompanying drawings are incorporated herein and form a part of the specification.
FIG. 1 is a block diagram of a system for transmitting messages to a display device based on detected audio output, according to some embodiments.
FIG. 2 is a block diagram of data flow in the system for transmitting messages to a display device based on detected audio output, according to some embodiments.
FIG. 3 is a flowchart illustrating a process determining whether a display device is enabled to receive communication using a transmission protocol, according to some embodiments.
FIG. 4 is a flowchart illustrating a process for determining whether a display device is enabled to receive communication using a communication system, according to some embodiments.
FIG. 5 is an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof, for transmitting messages to a display device based on detected audio output.

As indicated above, a digital media player may need to determine whether a display device is enabled to receive messages using a particular transmission protocol such as Consumer Electronics Control (CEC), or a particular transmission protocol associated with a specific communication channel. Conventional methods that allow a digital media player to identify the transmission protocol enabled by a display device are often unreliable and require user feedback. Using conventional methods when a first device is configured to control a second device, user intervention is required to validate a successful configuration. Additionally, the quality of connection between the device requires user feedback. The disclosure herein describes at least one technique for automatically verifying the effectiveness of the control channel or specific transmission protocol (e.g., connectivity, configuration, quality) or effectiveness by employing a sensor (e.g., microphone), to monitor (e.g., listen) for correct behavior of a second device (e.g., sound rendering device), and report to the first device the presence, absence, intensity, character of the light, or character of the sound, thereby providing feedback as to the success.

In a given embodiment, a digital media player can transmit a set of instructions to a remote control device, such a device including a microphone, to detect audio output from a speaker coupled to a display device. The microphone of the remote control device can detect the audio output from the speaker and can transmit a communication to the digital media player indicating the detection of the audio output. The digital media player can receive communication from the remote control device, indicating the detected audio output from the speaker. The digital media player can transmit a message to the display device to control the audio output of the speaker using a transmission protocol and/or the transmission protocol associated with a specific communication channel. The remote control device can determine whether an attribute associated with the audio output of the speaker is within a predetermined threshold. In response to determining that the attribute associated with the audio output is within the predetermined threshold, the remote control device can transmit a communication to the digital media player. In response to determining that the audio output is outside the predetermined threshold, the remote control device can transmit a communication to the digital media player.

In response to receiving the communication from the remote control indicating that an attribute associated with the audio output of the speaker is within a predetermined threshold, further indicating that the display device successfully processed the message, the digital media player can determine that the display device is configured to communicate via the transmission protocol and/or a transmission protocol associated with a specific communication channel.

The above configuration allows a digital media player to determine whether a display device such as a television is enabled to receive messages using a particular transmission protocol, without user feedback. Furthermore, the above configuration is reliable, as the digital media player can confirm whether a message transmitted using the transmission protocol was successfully processed by the display device. In another example, the above configuration allows a digital media player to determine whether a display device such as a television is enabled to receive messages using a particular transmission protocol over a particular channel, without user feedback. Furthermore, the above configuration is reliable, as the digital media player can confirm whether a message transmitted using a transmission protocol over a particular channel was successfully processed by the display device.

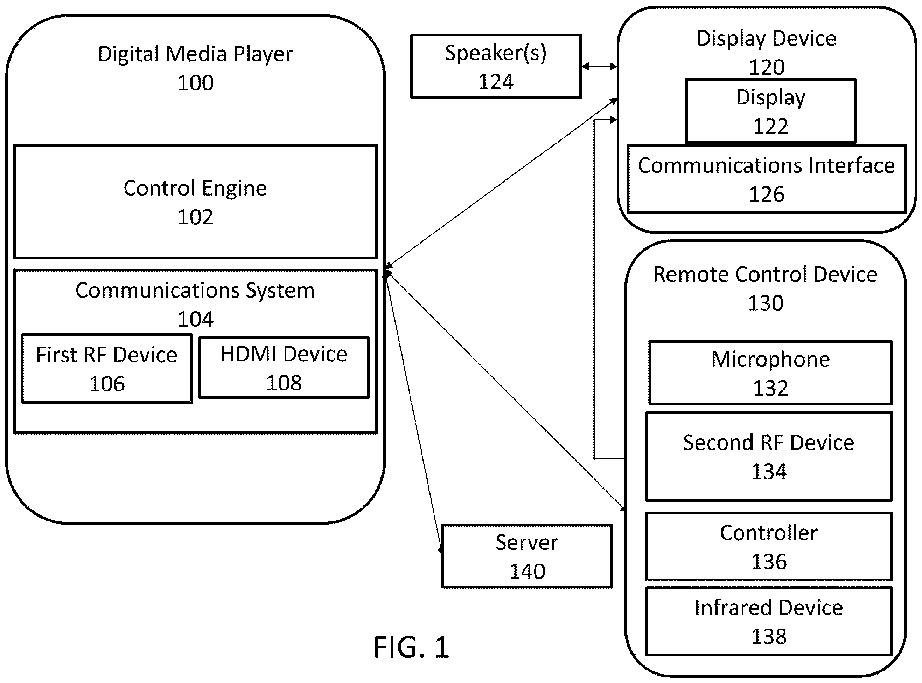

FIG. 1 is a block diagram of a system for transmitting messages to a display device based on detected audio output, according to some embodiments. In an embodiment, the system can include a digital media player 100, display device 120, remote control device 130, and server 140. Digital media player 100 and remote control device 130 can be connected through a wireless connection using Radio Frequency (RF) devices. In at least one embodiment the devices can be connected using Z-wave, Zigbee, Bluetooth, Bluetooth LE, Wi-Fi, or another wireless technology standard. Digital media player 100, display device 120, and server 140 can be connected through wired connections, wireless connections, or a combination of wired and wireless connections.

As an example, digital media player 100 can be connected to display device 120 and server 140 via a network. The network can be an ad hoc network, an intranet, an extranet, a virtual private network (VPN), a local area network (LAN), a wireless LAN (WLAN), a wide area network (WAN), a wireless wide area network (WWAN), a metropolitan area network (MAN), a portion of the Internet, a portion of the Public Switched Telephone Network (PSTN), a cellular telephone network, a wireless network, a WiFi network, a WiMax network, any other type of network, or a combination of two or more such networks.

As another example, digital media player 100 can be connected to display device 120 through a wired connection such as HDMI. Furthermore, digital media player 100 can be connected to display device 120 using Near Field Technology (NFC) such as Bluetooth^{®}, Infrared, RF, or the like. Additionally, remote control device 130 can communicate with display device 120 using infrared device 138. In at least one embodiment, the remote control device can be connected to the display device or the digital media player via Bluetooth, Wi-Fi, or other wireless technology standard allowing for exchanging data between devices over short distances.

Digital media player 100 can include a control engine 102 and communications interface 104. In at least one embodiment, the digital media player is a computing device. Control engine 102 may be the firmware of digital media player 100. The firmware of digital media player 100 may be programmable code that controls the operation of digital media player 100. Digital media player 100 may receive updates for control engine 102 from server 140. Communications interface 104 can include a first RF device 106 and HDMI device 108. Digital media player 100 can communicate with the display device 120 through communications interface 104 to provide streaming video, audio, or video and audio content to display device 120. The content can be live or recorded programs provided from media servers, such as server 140 or broadcast channels. The content can include but is not limited to live broadcast programs, recorded programs, pay-per-view programs, on-demand programs, advertisements, etc.

Control engine 102 can identify a mode of communication enabled by display device 120 and deliver the content along with other information associated with the content using the identified mode of communication. As an example, the mode of communication can be a transmission protocol, such as the CEC transmission protocol. Control engine 102 can receive messages from remote control device 130 to control the content rendered by display device 120.

CEC transmission protocol allows digital media player 100 to transmit messages to display device 120 through HDMI ports. CEC is a shared bus that is directly connected between HDMI ports of digital player 100 and display device 120. The following are messages commonly transmitted over the CEC transmission protocol: One Touch Play, System Standby, Preset Transfer, One Touch Record, Timer Programming, System Information, Deck Control, Tuner Control, OSD Display, Device Menu Control, Routing Control, Remote Control Passthrough, Device OSD Name Transfer, System Audio Control. The messages transmitted over the CEC transmission protocol may be associated with playback of content including audio and video data. The content may be live broadcast, prerecorded, on-demand, pay-per-view, or the like.

Display device 120 can include display 122 and can be coupled to speaker(s) 124. Speaker(s) 124 can be built into display device 120. Alternatively, speaker(s) 124 can be coupled to display device 120 through a wired or wireless connection. For example, speaker(s) 124 can be coupled to display device 120 through NFC connection, such as Bluetooth ^{®}. Speaker(s) 124 can be a single unitary speaker. Alternatively, speaker(s) 124 can be part of a group of speakers in an arrangement such as Surround Sound.

Display device 120 can be configured to receive messages associated with video content from digital media player 100 using communications interface 126. Communications interface 126 can enable a transmission protocol or a communication system to receive messages associated with rendering content. The communication system can be an alternative communication system to the transmission protocol and/or particular communication channel initially tested. For example if it is determined that transmission protocol A is not functioning as expected, the communication system can be an alternative transmission protocol over the same communication channel, or an alternative communication channel. Communication system can include an infrared communication system, wired communication channel, short range wireless communication, Wi-Fi, or another communication protocol capable of transmitting messages between devices. The content can include audio and video data. The messages can include a combination of displaying video data, rendering audio data through the speaker(s) 124, controlling the volume of the audio data, controlling the picture settings of the video data, or the like. Display device 120 can process and execute commands in the messages received from digital media player 100. Display device 120 can be a television, monitor, laptop, mobile device, or the like.

Remote control device 130 can include microphone 132, second RF device 134, controller 136, and infrared device 138. Remote control device 130 can be configured to receive user inputs, which correspond to commands associated with the content to be rendered by display device 120. The user inputs can be transmitted to digital media player 100 using second RF device 134. Control engine 102 can correlate the user inputs to the desired commands and instruct display device 120 to execute the desired commands. Alternatively, controller 136 can correlate the user inputs to the desired commands and transmit the desired commands to digital media player 100 using second RF device 134. In some embodiments, remote control device 130 may communicate with display device 120 using infrared device 138. For example, control engine 102 can correlate the user inputs to the desired commands, and instruct remote control device 130 to transmit the commands to display device 120, using infrared device 138.

Microphone 132 can receive audio rendered by speaker(s) 124. Controller 136 can process the audio input and generate a corresponding request or response. Controller 136 can transmit the request or response to digital media player 100 using second RF device 134.

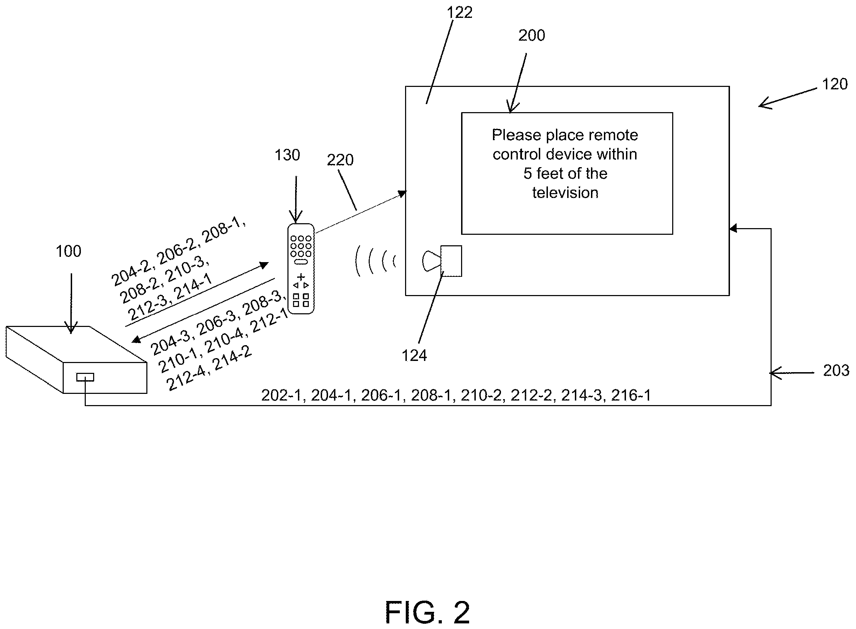

FIG. 2 is a block diagram illustrating a data flow system for determining whether a display device enables a transmission protocol. FIG. 2 will be described with respect to FIG. 1.

In a given embodiment, a user can attempt to set up their digital media player 100 with display device 120. The display device 120 can be a television. Digital media player 100 can be connected to display device 120 using HDMI connection 203. In some embodiments, the communication from digital media player 100 to display device 120 may be one-way communication over the HDMI connection 203. Digital media player 100 can form an HDMI connection 203 with the display device 120 by receiving one end of an HDMI cord in an HDMI port while the other end of the HDMI cord is received by display device 120 in an HDMI port. Display device 120 may or may not be enabled to receive messages through HDMI connection 203. In some embodiments, display device 120 may be configured to receive messages from remote control device 130 through infrared communication 220.

In response to forming a connection with display device 120, control engine 102 of digital media player 100 can detect audio-rendering devices. For example, in response to forming a connection with display device 120, control engine 102 can detect display 122 and speaker 124. As indicated with respect to Fig. 1, speaker 124 can be built-in display device 120 or located outside display device 120. In either case, speaker 124 can be coupled to display device 120.

In response to detecting display 122 and speaker 124, control engine 102 can transmit request 202-1 to display device 120 to initiate a guided setup of digital media player 100. The guided setup can require display device 120 to be connected to an internet connection to download the appropriate software. Alternatively, the appropriate software can be included in request 202-1. In at least one embodiment the sensor (e.g., microphone) associated with the remote control device is initiated in response to the guided setup being initialized, and/or is disabled in response to the guided setup being completed.

Display device 120 can receive request 202-1 and display prompts on display 122 to walk the user through the guided setup. As part of the guided setup, digital media player 100 can attempt to determine whether a particular transmission protocol is enabled by display device 120. The transmission protocol can be used to transmit messages to display device 120 for processing. The messages can be associated with the audio and video data to be rendered by display device 120. For example, the commands can include volume control, mute, unmute, record, playback, rewind, forward, tuner control, or the like. As a non-limiting example, the transmission protocol can be the CEC transmission protocol. As such, digital media player 100 may attempt to determine whether digital media player may transmit messages to display device 120 through HDMI connection 203.

The guided setup can render a prompt 200 on display 122 instructing a user to place remote control device 130 within a predetermined distance from display device 120. Control engine 102 can transmit request 204-1 to display device 120 to render audio data from speaker 124. Request 204-1 may include a combination of audio and video data to be rendered by display device 120. Display device 120 can receive request 204-1 and output the audio data from speaker 124.

Control engine 102 can transmit request 204-2 to remote control device 130. Request 204-2 can include instructions to detect audio data being output by speaker 124 within a predetermined timeframe. Request 204-2 can transmit to remote control device 130 using first RF device 106.

Remote control device 130 can receive request 204-2 using second RF device 134. Based on the instructions in request 204-2, controller 136 can instruct microphone 132 of remote control device 130 to detect the audio data rendered by speaker 124. In response to microphone 132 detecting the audio data rendered by speaker 124, controller 136 of remote control device 130 can generate response 204-3. Response 204-3 can include a confirmation message confirming that microphone 132 was able to detect the audio data rendered by speaker 124. Response 204-3 can be transmitted to digital media player 100 using second RF device 134 of remote control device 130.

In some embodiments, request 204-2 can include instructions for remote control device 130 to detect audio data being output by speaker 124 with a particular audio signature, such as a particular song, sound, music, or the like. Microphone 132 can detect audio data, and controller 136 can parse the audio data to identify its frequency, amplitude, some other characteristic, or any combination of characteristics. Controller 136 can determine the audio signature of the audio data using the frequency, amplitude, or other characteristics in any combination. Controller 136 can match the determined audio signature with the audio signature included in request 204-2. In response to matching the audio signature to within a threshold, controller 136 of remote control device 130 can generate response 204-3. Response 204-3 can include a confirmation message confirming that microphone 132 was able to detect the audio data rendered by speaker 124 with the particular audio signature.

In some embodiments, microphone 132 can detect and capture the audio data output from speaker 124. Controller 136 can include the captured audio data in response 204-3. Controller 136 can transmit response 204-3 to digital media player 100. Control engine 102 can parse the audio data included in response 204-3 to identify its frequency, amplitude, or other characteristics in any combination. Control engine 102 can determine the audio signature of the audio data using the frequency and amplitude or other characteristics in any combination. Control engine 102 can match the determined audio signature with the audio signature of the audio data supposed to be rendered by speaker 124 based on request 204-1. In response to matching the audio signature within a threshold, control engine 102 can confirm that speaker 124 is appropriately outputting the audio data included in request 204-1.

In response to control engine 102 confirming that the speaker 124 is outputting the audio data, control engine 102 can transmit request 206-1 to display device 120. Request 206-1 can be a message that includes a command associated with the audio data being output by speaker 124. The command can be to change the volume or mute the audio. Request 206-1 can be transmitted to display device 120 using the transmission protocol.

In the event display device 120 is enabled to receive messages through the transmission protocol, display device 120 can receive request 206-1 and process the message. For example, if the command in the message is associated with volume control, display device 120 can process the message to adjust the volume of the audio data being output by speaker 124 by an amount instructed in request 206-1. If the message includes a mute command, display device 120 can mute speaker 124.

In the event the display device 120 is not enabled to receive messages through transmission protocol, display device 120 cannot receive or process the message included in request 206-1. That is, the audio data being output by speaker 124 can be unchanged and unaffected.

Control engine 102 can transmit request 206-2 to remote control device 130 to determine whether display device 120 processed the message included in request 206-1 by determining that an attribute associated with the audio data is within a predetermined threshold. For example, if the command in the message is associated with volume control, request 206-2 can include instructions to determine whether the volume of the audio data being output by speaker 124 is within the predetermined threshold. If the message includes a mute command, request 206-2 can include instructions to determine whether the audio data being output has stopped being output from speaker 124.

Remote control device 130 can receive request 206-2, and controller 136 can instruct microphone 132 to detect and capture the audio being output by speaker 124. Controller 136 can determine whether the attribute associated with the audio data is within a predetermined threshold. The attribute can be the volume of the audio data. For example, controller 136 can determine whether the attribute is within a predetermined threshold of volume. In the event the message includes a mute command, the predetermined threshold can be an absence of audio from speaker 124. For example, controller 136 can determine whether speaker 124 is muted based on a lack of audio data detected from speaker 124.

In some embodiments, microphone 132 can be configured to detect and capture the audio being output by speaker 124 and controller 136 can be configured to determine whether the attribute associated with the audio data is within a predetermined threshold, independent of request 206-2.

In some embodiments, microphone 132 can detect and capture sounds that are not output from speaker 124. For example, microphone 132 can detect user conversations, sounds outside the user's house, sounds inside the user's house, etc. Controller 136 can be configured to differentiate between the audio data detected from speaker 124 and other sounds based on data associated with the audio data, such as the amplitude and frequency of the audio data output by speaker 124.

In response to determining that the attribute of the audio data is within the predetermined threshold, controller 136 can generate an affirmative communication, confirming that display device 120 processed the message transmitted by digital media player 100. Alternatively, in response to determining that the attribute is outside the predetermined threshold, controller 136 can generate a failure communication indicating that the display device 120 failed to process the message transmitted by digital media player 100. Controller 136 can generate response 206-3. Response 206-3 can include the affirmative message or failure message. Response 206-3 can be transmitted to digital media player 100 using second RF device 134.

Digital media player 100 can receive response 206-3. If response 206-3 includes an affirmative communication, control engine 102 can determine that display device 120 is enabled to receive messages using the transmission protocol. Specifically, digital media player 100 can determine that display device 120 may receive messages via HDMI connection 203 using the transmission protocol (e.g., CEC transmission protocol). Digital media player 100 can transmit all future messages associated with the output of audio or video data to display device 120 using the transmission protocol.

If response 206-3 includes a failure communication, control engine 102 can determine that display device 120 is not enabled to receive messages using the transmission protocol and instead may be configured to receive messages using a communication system that is different than the transmission protocol. For example, control engine 102 may transmit future messages to remote control device 130 to transmit to display device using infrared device 138. Digital media player 100 can transmit all future messages associated with the output of audio or video data to display device 120 via remote control device 130's infrared device 138.

In some embodiments, digital media player 100 can confirm that display device 120 is configured to receive messages through a communication system (e.g., infrared communication 220) by transmitting request 208-1, including a message with a command associated with the audio data rendered by speaker 124 to display device 120 via remote control device 130's infrared device 138. The message can be the same message in request 206-1 or a different message.

In the event that display device 120 is enabled to receive messages via remote control device 130's infrared device 138, display device 120 can receive request 208-1 and process the message. For example, if the command in the message is associated with volume control, display device 120 can process the message to adjust the volume of the audio data being output by speaker 124 by an amount instructed in request 208-1. If the message includes a mute command, display device 120 can mute speaker 124.

In the event that the display device 120 is not enabled to receive messages via remote control device 130's infrared device 138, display device 120 cannot receive or process the message included in request 208-1. That is, the audio data being output by speaker 124 can be unchanged and unaffected.

Control engine 102 can transmit request 208-2 to remote control device 130 to determine whether display device 120 processed the message included in request 208-1 by determining whether an attribute associated with the audio data is within a predetermined threshold. Remote control device 130 can receive request 208-2, and controller 136 can instruct microphone 132 to detect and capture the audio being output by speaker 124. Controller 136 can determine whether the attribute associated with the audio data is within a predetermined threshold.

In response to determining that the attribute of the audio data is within the predetermined threshold, controller 136 can generate an affirmative message, confirming that display device 120 processed the message transmitted by digital media player 100. Alternatively, in response to determining that the attribute is outside the predetermined threshold, the controller 136 can generate a failure message indicating that the display device 120 failed to process the message transmitted by digital media player 100. Controller 136 can generate response 208-3. Response 208-3 can include the affirmative message or failure message. Response 208-3 can be transmitted to digital media player 100 using second RF device 134.

Digital media player 100 can receive response 208-3. If response 208-3 includes an affirmative message, control engine 102 can determine that display device 120 is enabled to receive messages via remote control device 130's infrared device 138. Digital media player 100 can transmit all future messages associated with audio or video playback via remote control device 130's infrared device 138. In response to receiving a failure message, control engine 102 can determine that display device 120 is not enabled to receive messages via remote control device 130's infrared device 138.

In some embodiments, digital media player 100 can also confirm whether display device 120 is operational based on the audio data output by speaker 124. Remote control device 130 can receive a user input associated with a message for changing a channel or playback particular video content, including audio and video data. Remote control device 130 can transmit request 210-1, including the user input and/or message to digital media player 100 using second RF device 134.

Digital media player 100 can receive request 210-1. Control engine 102 can transmit request 210-2 to display device 120, via a communication system (e.g., infrared communication 220) or the transmission protocol and/or a transmission protocol associated with a specific communication channel (e.g., HDMI). Request 210-2 can include the message for changing a channel (e.g., tv channel) or playback particular video content. Display device 120 can process the message and attempt to change the channel or playback the particular video content.

Control engine 102 can transmit a request 210-3 to remote control device 130 using first RF device 106. The request 210-3 can include instructions to determine whether display device 120 processed the message successfully based on detected audio output by speaker 124.

Remote control device 130 can receive request 210-3, and controller 136 can instruct microphone 132 to detect audio data being output by speaker 124. In the event microphone 132 successfully detects audio data being output by speaker 124, controller 136 can generate a success message. In the event microphone 132 fails to detect audio data being output by speaker 124, controller 136 can generate a failure message. Controller 136 can generate response 210-4, including the success message or failure message and transmit response 210-4 to digital media player 100 using second RF device 134.

Digital media player 100 can receive response 210-4. In the event response 210-4 includes a success message, control engine 102 can determine display device 120 successfully processed the message and is outputting the desired video content (based on changing the channel or playing back particular video content). In the event response 210-4 includes a failure message, control engine 102 can determine display device 120 has either failed to process the message or there is some technical difficulty with playing back the desired video content. The technical difficulty can be caused by technical issues with display device 120, loss of connection, technical issues caused by a broadcast provider, or the like. Control engine 102 can attempt to execute remedial measures to resolve any technical difficulty, such as transmitting a message to server 140 to determine whether there is an issue with a broadcast provider, loss of connection, or power outage. This allows the system to initiate troubleshooting any issues before a user-initiated request.

In some embodiments, digital media player 100 can set up a surround sound speaker system detected audio output. As indicated above, speaker 124 can be a surround sound speaker system, including multiple speakers distributed around a given space (e.g., room, house, auditorium, or the like).

A user can provide inputs using remote control device 130, indicating a desire to set up a surround sound system. The surround sound system can include multiple different types of speakers, including subwoofer(s), amplifier(s), center channel speakers, specialized speakers, or the like. Each of the speakers can have a different role for outputting audio data. For example, a center speaker can be configured to output dialogue of a movie while the left and right speakers output music and effects as well as dialogue when characters of a movie move to the left or right of the screen. Each of the speakers can need to be set at different audio settings. The audio settings can include treble, bass, volume, or the like.

Remote control device 130 can transmit request 212-1 to digital media player 100 using second RF device 134 to setup the surround sound system. The request 212-1 can include the message and/or user input indicating a desire to set up the surround sound system. Digital media player 100 can receive request 212-1, and control engine 102 can transmit request 212-2 to display device 120. Request 212-2 can include instructions to output audio data from a specific speaker in the surround sound system at a desired audio setting, one speaker at a time. The instructions can include an order in which each speaker is configured to output the audio data. For example, the instructions can include outputting the audio data using the front speaker and confirming the audio settings of the front speaker, outputting the audio data using the front right speaker and confirming the audio settings of the front right speaker, outputting the audio data using the front left speaker and confirming the audio settings of the front left speaker, etc. Request 212-2 can also include instructions to display prompts on display 122 for the user to position remote control device 130 within a predetermined distance of a given speaker of the surround sound system when the given speaker is configured to output audio data. In at least one embodiment the RF device can be any short range wireless communication device.

Control engine 102 can transmit request 212-3 to remote control device 130, including instructions to detect audio settings of audio data output by a given speaker of a surround sound system. The instructions can include an order in which the audio data is to be output by each speaker of the surround sound system and the desired audio settings for the given speaker.

Display device 120 can receive request 212-2. Display device 120 can output audio data from each speaker individually, in the order included in request 212-2. For example, display device 120 can output audio data from a front speaker using the instructed audio settings. Display device 120 can also display a prompt on display 122 instructing the user to position remote control device 130 within a predetermined distance of the front speaker.

Controller 136 can instruct microphone 132 to detect and capture the audio output by the front speaker. Controller 136 can parse the audio data to determine whether the audio data was output by the front speaker at the correct audio settings by comparing the audio characteristics of the captured audio data with the desired audio settings received in request 212-3. In the event controller 136 determines that the audio data was output at the correct audio settings, controller 136 can generate a success message. In the event controller determines that the audio data was not output at the correct audio settings, controller 136 can generate a failure message. Controller 136 can include the success or failure message in response 212-4. Controller 136 can transmit response 212-4 to digital media player 100.

Digital media player (e.g., computing device) 100 can receive response 212-4. In the event response 212-4 includes a success message, control engine 102 can determine that the front speaker is correctly configured. In the event, response 212-4 includes a failure message, control engine 102 can instruct display device 120 to adjust the audio settings of the front speaker.

Display device 120, remote control device 130, and digital media player 100 can repeat the process for each speaker in the surround sound system to confirm the audio settings of the speakers of the surround sound system.

In some embodiments, digital media player 100 can control the playback of video content based on detected audio output. A user can carry remote control device 130 in their pocket, a holder attached to their clothing, or the like. Control engine 102 can transmit request 214-1 to detect the volume of the audio data output by speaker 124 using first RF device 106 to remote control device 130. Request 214-1 can include instructions to detect volume of audio output by speaker 124 continuously. The instructions can further include determining a change in the volume more than a threshold amount.

Remote control device 130 can receive request 214-1, and controller 136 can instruct microphone 132 to detect and capture audio data output by speaker 124 continuously. Controller 136 can determine the volume of the captured audio data. In response to determining a volume change greater than a threshold amount, controller 136 can generate a response 214-2. Response 214-2 can include an amount of change in the volume of audio data. Controller 136 can transmit response 214-2 to digital media player 100 using second RF device 134.

Digital media player 100 can receive response 214-2. Control engine 102 can determine whether the cause of change to the volume was caused factors such as: in response to a user command, completion of a television program, television malfunction, etc. In the event control engine 102 determines that the above factors did not cause the cause in the change to the volume, control engine 102 can determine the user has moved farther away from display device 120. In response to determining the change to the volume is more than a predetermined amount, control engine 102 can determine that the user has moved away from the display device and is no longer able to view display device 120. As a result, control engine 102 can transmit request 214-3, including a message with a command to pause or stop the playback of the video content from displaying device 120, via a communication system (e.g., infrared communication 220) or the transmission protocol or a particular communication channel. Display device 120 can receive request 214-3 and pause or stop the playback of the video content based on the message. In some embodiments, the message in request 214-3 can include a command to increase the volume of the audio output.

In some embodiments, speaker 124 can be a speaker system with multiple different speakers distributed around a building or house in multiple different rooms. In response to control engine 102 determining that the user has moved away from the display device and is no longer able to view the display device, control engine 102 can determine the user has moved into another room. Control engine 102 determines the location of the user within the house or building based on the volume of the audio output detected by microphone 132. Control engine 102 can determine the speaker closest to the user (e.g., a speaker in the room the user is located), based on the user's determined location. Control engine 102 can transmit request 216-1 to display device 120 to output the audio data from the speaker closest to the user via a communication system (e.g., infrared communication 220) or the transmission protocol. Display device 120 can receive request 216-1 and can process the message by outputting the audio data from the speaker closest to the user.

In some embodiments, microphone 132 can be instructed to detect and capture audio data being output by speaker 124 continuously. Controller 136 can determine whether the volume of the captured audio data has dropped below a given threshold and transmit a message to digital media player 100. Digital media player 100 can transmit a message to display device 120 to increase the volume. This can assist hearing-challenged individuals that want the audio data to be output at a desired volume however cannot notice a decrease in volume. Furthermore, this can also assist individuals with vision impairments that the audio data to be output at a desired volume, however, can require assistance in providing user input to increase the volume. In this regard, a user can set a desired a default volume level and digital media player can ensure the volume level is maintained within the threshold of the default volume level based on the audio data detected by microphone 132.

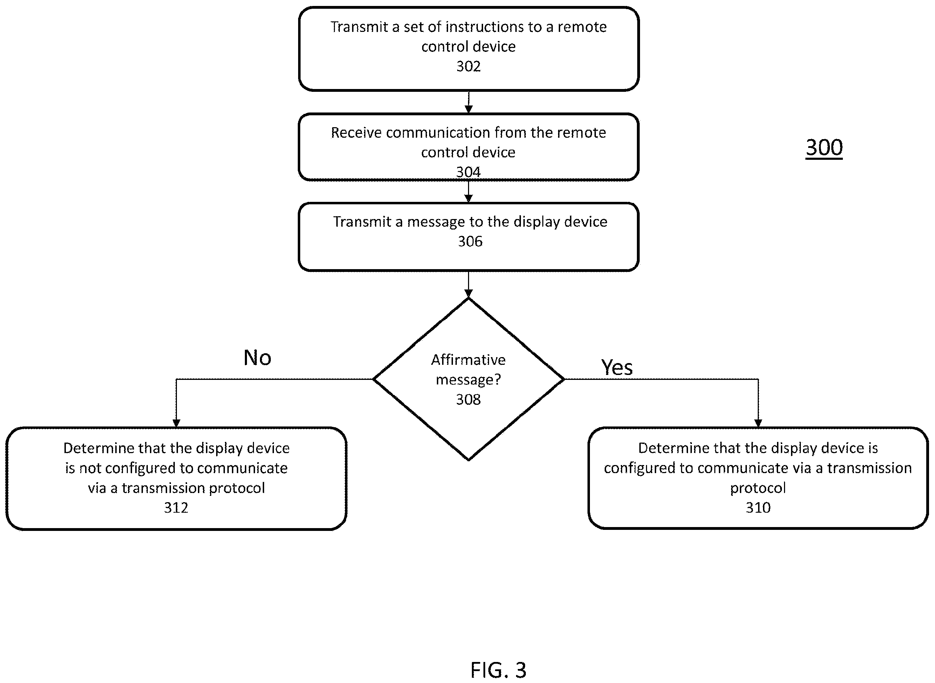

FIG. 3 is a flowchart illustrating a process for determining whether a display device is enabled to receive messages using a transmission protocol and/or a transmission protocol over a particular communication channel, according to some embodiments. Method 300 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 3, as will be understood by a person of ordinary skill in the art.

Method 300 shall be described with reference to FIG. 1. However, method 300 is not limited to that example embodiment.

In 302, digital media player 100 transmits a set of instructions to a remote control device 130 including a microphone 132 to detect audio output from speaker 124 coupled to display device 120. Digital media player 100 can also instruct display device 120 to output the audio output using speaker 124. Digital media player 100 can communicate with remote control device 130 using an RF device. Furthermore, digital media player 100 is connected to display device 120 using an HDMI connection. Display device 120 can be a television configured to output audio and video data. Display device 120 can display the video content on display 122 and output the audio data using speaker 124.

In 304, digital media player 100 receives communication from remote control device 130, confirming the detection of the audio output from speaker 124. The communication can be a confirmation message transmitted using an RF device.

In 306, digital media player 100 transmits a message to display device 120 to control the audio output of speaker 124 using a transmission protocol. The message can include a command associated with controlling the volume of the audio output or a mute command. The transmission protocol can be a CEC transmission protocol transmitted using the HDMI connection.

In 308, digital media player 100 determines whether it received an affirmative message or failure message from remote control device 130 indicating whether display device 130 processed the message. In the event that controller 136 determines that an attribute of the audio output is within the predetermined threshold, controller 136 generates an affirmative message indicating that display device 120 successfully processed the message. As an example, the attribute can be the volume of the audio output. Microphone 132 of remote control device 130 can detect and capture audio output from speaker 124. Controller 136 can determine whether the volume of the audio output is within a predetermined threshold. In the event the command in the message was associated with adjusting the volume, controller 136 can determine whether the volume is within the desired range indicated in the command. In the event the message includes a mute command, controller 136 can determine that microphone 132 was unable to detect audio output from speaker 124.

Controller 136 transmits the affirmative message to digital media player 100. In the event controller 136 determines that the attribute of the audio output is outside the predetermined threshold, controller 136 generates a failure message indicating display device 120 did not successfully process the message.

In response to receiving an affirmative message from remote control device 130, which indicates that display device 120 successfully processed the message, method 300 proceeds to 310.

In 310, digital media player 100 determines that display device 120 is configured to communicate via the transmission protocol. Digital media player 100 can transmit all future messages to display device 120 using transmission protocol. The messages can be associated with controlling the audio or video data configured to be output by display device 120.

In response to receiving a failure message from remote control device 130 indicating that display device 120 failed to process the message, method 300 proceeds to 312.

In 312, digital media player 100 determines that display device 120 is not configured to communicate via the transmission protocol.

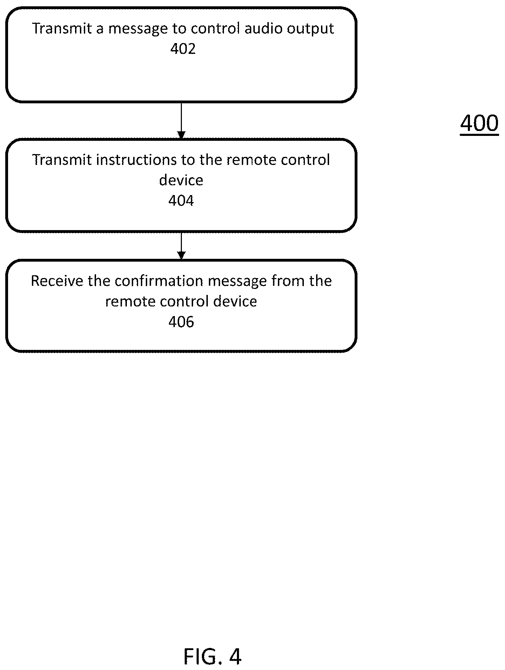

FIG. 4 is a flowchart illustrating a process for confirming that a display device is enabled to receive messages using a communication system. Method 400 can be performed by processing logic that can comprise hardware (e.g., circuitry, dedicated logic, programmable logic, microcode, etc.), software (e.g., instructions executing on a processing device), or a combination thereof. It is to be appreciated that not all steps can be needed to perform the disclosure provided herein. Further, some of the steps can be performed simultaneously, or in a different order than shown in FIG. 4, as will be understood by a person of ordinary skill in the art.

Method 400 shall be described with reference to FIG. 1. However, method 400 is not limited to that example embodiment.

In 402, digital media player 100 transmits a message to control audio output by speaker 124 coupled to display device 120 using a communication system. The communication system may be an infrared communication system. As such, digital media player 100 may transmit the message via remote control 130's infrared device 138. The message can include a command to control the volume of audio output or a mute command.

In 404, digital media player 100 transmits instructions to remote control device 130 including microphone 132 to confirm the display device processed the message by determining whether the attribute associated with audio output from the speaker is within a predetermined threshold. As an example, the attribute can be volume of the audio output. Microphone 132 of remote control device 130 can detect and capture audio output from speaker 124. Controller 136 can determine whether the volume of the audio output is within the predetermined threshold. In the event the message was adjusting the volume, controller 136 can determine whether the volume is within the desired range indicated in the message. In the event the message included a mute command, controller 136 can determine that microphone 132 was unable to detect audio output from speaker 124. In the event controller 136 determines that the attribute of the audio output is within the predetermined threshold, controller 136 generates a confirmation message indicating that display device 120 successfully processed the message.

In 406, digital media player 100 receives the confirmation message from remote control device 130, indicating that display device 120 successfully processed the message. Digital media player 100 can transmit all future messages to display device 120 using the communication system (e.g., infrared communication). In at least one embodiment in response to determining that a message was not received via a first connection means (e.g., particular transmission protocol over a particular communication channel), another message can be sent via a second connection means (e.g., an alternative protocol over the same connection channel) to determine whether the second connection means should be set as the primary connection means. In an embodiment in response to determining that a message was not received via a first connection means (e.g., a particular communication channel), another message can be sent via a second connection means (e.g., an alternative connection channel) to determine whether the second connection means should be set as the primary connection means. The messages can be associated with controlling the audio or video data configured to be output by display device 120. In at least one embodiment, the digital media player includes the display device. In at least one embodiment the digital media player is a smart television (TV).

In at least one embodiment, the digital media player 100 can identify a second device or set of devices (e.g., output speaker 124) to which it is communicatively coupled. In response to identifying the second device(s), the digital media player can transmit a message to the second device(s) to which its coupled. The second device(s) can transmit a second message (received message and/or an alternative message) in response to the receiving the message from the digital media player. The second message can be an audio message in a frequency audible to the human ear, or a frequency not audible to the human ear. The sensor (e.g., microphone) associated with the remote-control device 130 can listen for the second message, and in response to receiving the second message can transmit a third message to the digital media player. The third message can include a notification that the second message was received, and/or information (e.g., quality, distance) about the second message that was received.

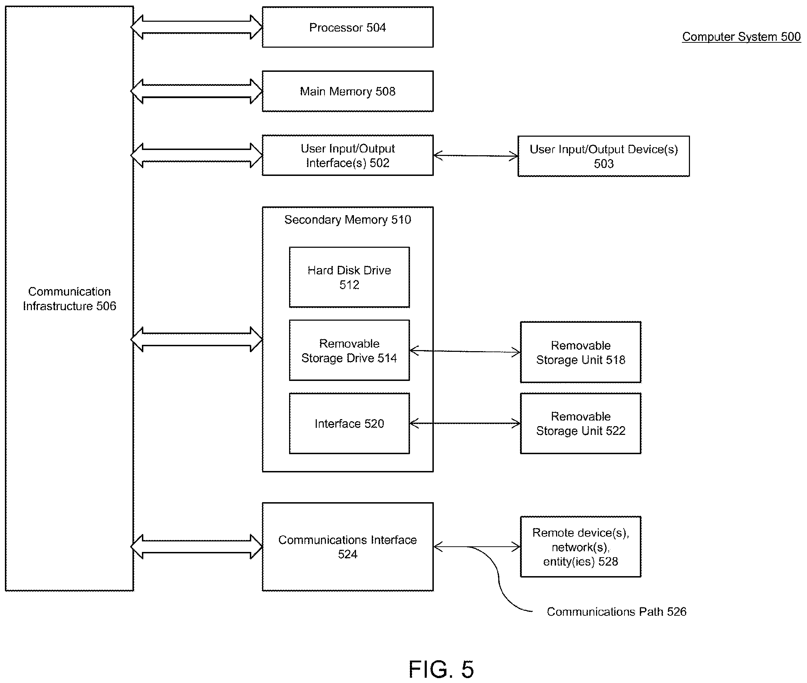

Various embodiments can be implemented, for example, using one or more computer systems, such as computer system 500 shown in FIG. 5. Computer system 500 can be used, for example, to implement method 300 of FIG. 3, 400 of FIG. 4. Furthermore, computer system 500 can be at least part of digital media player 100, display device 120, and server 140, as shown in FIG. 1. For example, computer system 500 can transmit message to a display device 120 based on detected audio output by the display device. Computer system 500 can be any computer capable of performing the functions described herein.

Computer system (e.g., computing device, digital media player) 500 can be any well-known computer capable of performing the functions described herein.

Computer system 500 includes one or more processors (also called central processing units, or CPUs), such as a processor 504. Processor 504 is connected to a communication infrastructure or bus 506.

One or more processors 504 can each be a graphics processing unit (GPU). In an embodiment, a GPU is a processor that is a specialized electronic circuit designed to process mathematically intensive applications. The GPU can have a parallel structure that is efficient for parallel processing of large blocks of data, such as mathematically intensive data common to computer graphics applications, images, videos, etc.

Computer system 500 also includes user input/output device(s) 503, such as monitors, keyboards, pointing devices, etc., that communicate with communication infrastructure 506 through user input/output interface(s) 502.

Computer system 500 also includes a main or primary memory 508, such as random access memory (RAM). Main memory 508 can include one or more levels of cache. Main memory 508 has stored therein control logic (i.e., computer software) and/or data.

Computer system 500 can also include one or more secondary storage devices or memory 510. Secondary memory 510 can include, for example, a hard disk drive 512 and/or a removable storage device or drive 514. Removable storage drive 514 can be a floppy disk drive, a magnetic tape drive, a compact disk drive, an optical storage device, tape backup device, and/or any other storage device/drive.

Removable storage drive 514 can interact with a removable storage unit 518. Removable storage unit 518 includes a computer usable or readable storage device having stored thereon computer software (control logic) and/or data. Removable storage unit 518 can be a floppy disk, magnetic tape, compact disk, DVD, optical storage disk, and/ any other computer data storage device. Removable storage drive 514 reads from and/or writes to removable storage unit 518 in a well-known manner.

According to an exemplary embodiment, secondary memory 510 can include other means, instrumentalities, or other approaches for allowing computer programs and/or other instructions and/or data to be accessed by computer system 500. Such means, instrumentalities, or other approaches can include, for example, a removable storage unit 522 and an interface 520. Examples of the removable storage unit 522 and the interface 520 can include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 500 can further include a communication or network interface 524. Communication interface 524 enables computer system 500 to communicate and interact with any combination of remote devices, remote networks, remote entities, etc. (individually and collectively referenced by reference number 528). For example, communication interface 524 can allow computer system 500 to communicate with remote devices 528 over communications path 526, which can be wired and/or wireless, and which can include any combination of LANs, WANs, the Internet, etc. Control logic and/or data can be transmitted to and from computer system 500 via communication path 526.

In an embodiment, a tangible, non-transitory apparatus or article of manufacture comprising a tangible, non-transitory computer useable or readable medium having control logic (software) stored thereon is also referred to herein as a computer program product or program storage device. This includes, but is not limited to, computer system 500, main memory 508, secondary memory 510, and removable storage units 518 and 522, as well as tangible articles of manufacture embodying any combination of the foregoing. Such control logic, when executed by one or more data processing devices (such as computer system 500), causes such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 5. In particular, embodiments can operate with software, hardware, and/or operating system implementations other than those described herein.

It is to be appreciated that the Detailed Description section, and not any other section, is intended to be used to interpret the claims. Other sections can set forth one or more but not all exemplary embodiments as contemplated by the inventor, and thus, are not intended to limit this disclosure or the appended claims in any way.

While this disclosure describes exemplary embodiments for exemplary fields and applications, it should be understood that the disclosure is not limited thereto. Other embodiments and modifications thereto are possible, within the scope of the appended claims. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments can perform functional blocks, steps, operations, methods, etc. using orderings different than those described herein.

References herein to "one embodiment," "an embodiment," "an example embodiment," or similar phrases, indicate that the embodiment described can include a particular feature, structure, or characteristic, but every embodiment need not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described exemplary embodiments, but should be defined only in accordance with the following claims.

## Claims

1. A method comprising:
transmitting, by one or more computing devices, a set of instructions to a remote control device (130) including a microphone (132) to detect audio output from a speaker (124) coupled to a display device (120);
receiving communication from the remote control device indicating the audio output from the speaker;
transmitting a message to the display device to control the audio output from the speaker using a transmission protocol;
transmitting a request to the remote control device to determine whether the display device processed the message; and
determining that the display device is configured to communicate via the transmission protocol, in response to receiving an affirmative message from the remote control device indicating that the display device successfully processed the message by determining an attribute associated with the audio output from the speaker is within a predetermined threshold.

2. The method of claim 1, further comprising determining that the display device is configured to communicate via a communication system, wherein the communication system is different than the transmission protocol, in response to receiving, by the one or more computing devices, a failure message from the remote control device indicating that the display device failed to process the message.

3. The method of claim 2, wherein in response to determining that the display device is configured to communicate via the communication system, the method further comprises:
transmitting the message to the display device to control the audio output from the speaker using the communication system;
transmitting a third set of instructions to the remote control device to confirm the display device processed the message by determining whether the attribute associated with the audio output from the speaker is within the predetermined threshold; and
receiving a confirmation message from the remote control device indicating that the display device successfully processed the message.

4. The method of claim 2, wherein in response to determining that the display device is configured to communicate via infrared communication, the method further comprises:
transmitting future communications to the display device via the communication system.

5. The method of claim 1, wherein the message to control the audio output from the speaker is a mute message.

6. The method of claim 1, wherein the remote control device is positioned within a predetermined distance of the display device.

7. The method of claim 1, wherein the transmission protocol is Consumer Electronics Control (CEC).

8. The method of claim 1, wherein in response to determining that the display device is configured to communicate via the transmission protocol, the method further comprises:
transmitting future communications to the display device via the transmission protocol.

9. A system comprising:
a memory; and
at least one processor coupled to the memory, the at least one processor configured to:
transmit a set of instructions to a remote control device (130) including a microphone (132) to detect audio output from a speaker (124) coupled to a display device (120);
receive communication from the remote control device indicating the audio output from the speaker;
transmit a message to the display device to control the audio output from the speaker using a transmission protocol;
transmit a request to the remote control device to determine whether the display device processed the message; and
determine that the display device is configured to communicate via the transmission protocol, in response to receiving an affirmative message from the remote control device indicating that the display device successfully processed the message by determining an attribute associated with the audio output from the speaker is within a predetermined threshold.

10. The system of claim 9, wherein the at least one processor is further configured to determine that the display device is configured to communicate via a communication system, wherein the communication system is different than the transmission protocol, in response to receiving a failure message from the remote control device indicating that the display device failed to process the message.

11. The system of claim 10, wherein in response to determining that the display device is configured to communicate via the communication system, the at least one processor is further configured to:
transmit the message to the display device to control the audio output from the speaker using the communication system;
transmit a third set of instructions to the remote control device to confirm the display device processed the message by determining whether the attribute associated with the audio output from the speaker is within the predetermined threshold; and
receive a confirmation message from the remote control device indicating that the display device successfully processed the message.

12. A remote control device (130) comprising:
a microphone (132); and
a controller (136) coupled to the microphone, the controller configured to:
control the microphone to detect audio output from a speaker (124) coupled to a display device (120) in response to receiving a set of instructions from a digital media player (100) coupled to the display device;
transmit communication to the digital media player indicating detection of the audio output from the speaker;
receive, from the digital media player, a request to determine whether the display device processed a message transmitted to the display device;
determine whether an attribute associated with the audio output from the speaker is within a predetermined threshold based on audio output from the speaker detected by the microphone; and
transmit an affirmative message to the digital media player, in response to determining that the attribute associated with the audio output from the speaker is within the predetermined threshold.

13. The remote control device of claim 12, the controller further configured to transmit a second message associated with video or audio content to the digital media player.

14. The remote control device of claim 12, further comprising a radio frequency element coupled to the controller, wherein the controller communicates with the digital media player using the radio frequency element.

15. A non-transitory computer-readable medium having instructions stored thereon that, when executed by at least one computing device, cause the at least one computing device to perform operations comprising:
transmitting a set of instructions to a remote control device (130) including a microphone (132) to detect audio output from a speaker (124) coupled to a display device (120);
receiving communication from the remote control device indicating the audio output from the speaker;
transmitting a message to the display device to control the audio output from the speaker using a transmission protocol;
transmitting a request to the remote control device to determine whether the display device processed the message; and
determining that the display device is configured to communicate via the transmission protocol, in response to receiving an affirmative message from the remote control device indicating that the display device successfully processed the message by determining an attribute associated with the audio output from the speaker is within a predetermined threshold.

## Patentansprüche

1. Verfahren, das Folgendes umfasst:
Senden eines Satzes von Befehlen an eine Fernsteuervorrichtung (130), die ein Mikrofon (132) beinhaltet, durch eine oder mehrere Computervorrichtungen, um eine Audioausgabe aus einem Lautsprecher (124), der mit einer Anzeigevorrichtung (120) gekoppelt ist, zu detektieren;
Empfangen einer Kommunikation von der Fernsteuervorrichtung, die die Audioausgabe aus dem Lautsprecher angibt;
Senden einer Nachricht an die Anzeigevorrichtung, um die Audioausgabe aus dem Lautsprecher unter Verwendung eines Übertragungsprotokolls zu steuern;
Senden einer Anfrage an die Fernsteuervorrichtung, um zu bestimmen, ob die Anzeigevorrichtung die Nachricht verarbeitet hat; und
als Reaktion auf das Empfangen einer bestätigenden Nachricht von der Fernsteuervorrichtung, die angibt, dass die Anzeigevorrichtung die Nachricht erfolgreich verarbeitet hat, indem bestimmt wird, dass ein Attribut, das der Audioausgabe aus dem Lautsprecher zugeordnet ist, innerhalb eines vorbestimmten Schwellenwerts liegt, Bestimmen, dass die Anzeigevorrichtung ausgelegt ist, um über das Übertragungsprotokoll zu kommunizieren.

2. Verfahren nach Anspruch 1, das ferner das Bestimmen umfasst, dass die Anzeigevorrichtung ausgelegt ist, um als Reaktion auf den Empfang einer Fehlernachricht von der Fernsteuervorrichtung durch die eine oder die mehreren Computervorrichtungen, die angibt, dass die Anzeigevorrichtung die Nachricht nicht verarbeiten konnte, über ein Kommunikationssystem zu kommunizieren, wobei sich das Kommunikationssystem von dem Übertragungsprotokoll unterscheidet.

3. Verfahren nach Anspruch 2, wobei als Reaktion auf das Bestimmen, dass die Anzeigevorrichtung ausgelegt ist, um über das Kommunikationssystem zu kommunizieren, das Verfahren ferner Folgendes umfasst:
Senden der Nachricht an die Anzeigevorrichtung, um die Audioausgabe aus dem Lautsprecher unter Verwendung des Kommunikationssystems zu steuern;
Senden eines dritten Satzes von Befehlen an die Fernsteuervorrichtung, um zu bestätigen, dass die Anzeigevorrichtung die Nachricht verarbeitet hat, indem bestimmt wird, ob das Attribut, das der Audioausgabe aus dem Lautsprecher zugeordnet ist, innerhalb des vorbestimmten Schwellenwerts liegt, und
Empfangen einer Bestätigungsnachricht von der Fernsteuervorrichtung, die angibt, dass die Anzeigevorrichtung die Nachricht erfolgreich verarbeitet hat.

4. Verfahren nach Anspruch 2, wobei als Reaktion auf das Bestimmen, dass die Anzeigevorrichtung ausgelegt ist, um über Infrarotkommunikation zu kommunizieren, das Verfahren ferner Folgendes umfasst:
Senden zukünftiger Kommunikation über das Kommunikationssystem an die Anzeigevorrichtung.

5. Verfahren nach Anspruch 1, wobei die Nachricht zum Steuern der Audioausgabe aus dem Lautsprecher eine stumme Nachricht ist.

6. Verfahren nach Anspruch 1, wobei die Fernsteuervorrichtung innerhalb eines vorbestimmten Abstands von der Anzeigevorrichtung angeordnet ist.

7. Verfahren nach Anspruch 1, wobei das Übertragungsprotokoll eine Consumer Electronics Control (CEC) ist.

8. Verfahren nach Anspruch 1, wobei als Reaktion auf das Bestimmen, dass die Anzeigevorrichtung ausgelegt ist, um über das Übertragungsprotokoll zu kommunizieren, das Verfahren ferner Folgendes umfasst:
Senden zukünftiger Kommunikation über das Übertragungsprotokoll an die Anzeigevorrichtung.

9. System, umfassend:
einen Speicher; und
zumindest einen Prozessor, der mit dem Speicher gekoppelt ist, wobei der zumindest eine Prozessor ausgelegt ist zum:
Senden eines Satzes von Befehlen an eine Fernsteuervorrichtung (130), die ein Mikrofon (132) beinhaltet, um eine Audioausgabe aus einem Lautsprecher (124), der mit einer Anzeigevorrichtung (120) gekoppelt ist, zu detektieren;
Empfangen einer Kommunikation von der Fernsteuervorrichtung, die die Audioausgabe aus dem Lautsprecher angibt;
Senden einer Nachricht an die Anzeigevorrichtung, um die Audioausgabe aus dem Lautsprecher unter Verwendung eines Übertragungsprotokolls zu steuern;
Senden einer Anfrage an die Fernsteuervorrichtung, um zu bestimmen, ob die Anzeigevorrichtung die Nachricht verarbeitet hat; und
als Reaktion auf den Empfang einer bestätigenden Nachricht von der Fernsteuervorrichtung, die angibt, dass die Anzeigevorrichtung die Nachricht erfolgreich verarbeitet hat, indem bestimmt wird, dass ein Attribut, das der Audioausgabe aus dem Lautsprecher zugeordnet ist, innerhalb eines vorbestimmten Schwellenwerts liegt, Bestimmen, dass die Anzeigevorrichtung ausgelegt ist, um über das Übertragungsprotokoll zu kommunizieren.

10. System nach Anspruch 9, wobei der zumindest eine Prozessor ferner ausgelegt ist, um zu bestimmen, dass die Anzeigevorrichtung ausgelegt ist, um als Reaktion auf den Empfang einer Fehlernachricht von der Fernsteuervorrichtung, die angibt, dass die Anzeigevorrichtung die Nachricht nicht verarbeiten konnte, über ein Kommunikationssystem zu kommunizieren, wobei sich das Kommunikationssystem von dem Übertragungsprotokoll unterscheidet.

11. System nach Anspruch 10, wobei als Reaktion auf das Bestimmen, dass die Anzeigevorrichtung ausgelegt ist, um über das Kommunikationssystem zu kommunizieren, der zumindest eine Prozessor ferner ausgelegt ist zum:
Senden der Nachricht an die Anzeigevorrichtung unter Verwendung des Kommunikationssystems, um die Audioausgabe aus dem Lautsprecher zu steuern;
Senden eines dritten Satzes von Befehlen an die Fernsteuervorrichtung, um zu bestätigen, dass die Anzeigevorrichtung die Nachricht verarbeitet hat, indem bestimmt wird, ob das Attribut, das der Audioausgabe aus dem Lautsprecher zugeordnet ist, innerhalb des vorbestimmten Schwellenwerts liegt; und
Empfangen einer Bestätigungsnachricht von der Fernsteuervorrichtung, die angibt, dass die Anzeigevorrichtung die Nachricht erfolgreich verarbeitet hat.

12. Fernsteuervorrichtung (130), umfassend:
ein Mikrofon (132); und
eine Steuerung (136), die mit dem Mikrofon gekoppelt ist, wobei die Steuerung ausgelegt ist zum:
Steuern des Mikrofons, um eine Audioausgabe aus einem Lautsprecher (124), der mit einer Anzeigevorrichtung (120) gekoppelt ist, als Reaktion auf den Empfang eines Satzes von Befehlen von einem digitalen Medienabspielgerät (100), das mit der Anzeigevorrichtung gekoppelt ist, zu detektieren;
Senden einer Kommunikation an das digitale Medienabspielgerät, die die Detektion der Audioausgabe aus dem Lautsprecher angibt;
Empfangen einer Anfrage von dem digitalen Medienabspielgerät zum Bestimmen, ob die Anzeigevorrichtung eine an die Anzeigevorrichtung gesendete Nachricht verarbeitet hat;
basierend darauf, dass eine Audioausgabe aus dem Lautsprecher durch das Mikrofon detektiert wurde, Bestimmen, ob ein Attribut, das der Audioausgabe aus dem Lautsprecher zugeordnet ist, innerhalb eines vorbestimmten Schwellenwerts liegt; und
Senden einer bestätigenden Nachricht an das digitale Medienabspielgerät als Reaktion auf das Bestimmen, dass das Attribut, das der Audioausgabe aus dem Lautsprecher zugeordnet ist, innerhalb des vorbestimmten Schwellenwerts liegt.

13. Fernsteuervorrichtung nach Anspruch 12, wobei die Steuerung ferner ausgelegt ist, um eine zweite Nachricht, die einem Video- oder Audio-Inhalt zugeordnet ist, an das digitale Medienabspielgerät zu senden.

14. Fernsteuervorrichtung nach Anspruch 12, die ferner ein Hochfrequenzelement, das mit der Steuerung gekoppelt ist, umfasst, wobei die Steuerung unter Verwendung des Hochfrequenzelements mit dem digitalen Medienabspielgerät kommuniziert.

15. Nichtflüchtiges computerlesbares Medium, das darauf gespeicherte Befehle aufweist, die, wenn sie durch zumindest eine Computervorrichtung ausgeführt werden, bewirken, dass die zumindest eine Computervorrichtung Operationen durchführt, die Folgendes umfassen:
Senden eines Satzes von Befehlen an eine Fernsteuervorrichtung (130), die ein Mikrofon (132) beinhaltet, um eine Audioausgabe aus einem Lautsprecher (124), der mit einer Anzeigevorrichtung (120) gekoppelt ist, zu detektieren;
Empfangen einer Kommunikation von der Fernsteuervorrichtung, die die Audioausgabe aus dem Lautsprecher angibt;
Senden einer Nachricht an die Anzeigevorrichtung, um die Audioausgabe aus dem Lautsprecher unter Verwendung eines Übertragungsprotokolls zu steuern;
Senden einer Anfrage an die Fernsteuervorrichtung, um zu bestimmen, ob die Anzeigevorrichtung die Nachricht verarbeitet hat; und
als Reaktion auf den Empfang einer bestätigenden Nachricht von der Fernsteuervorrichtung, die angibt, dass die Anzeigevorrichtung die Nachricht erfolgreich verarbeitet hat, indem bestimmt wird, dass ein Attribut, das der Audioausgabe aus dem Lautsprecher zugeordnet ist, innerhalb eines vorbestimmten Schwellenwerts liegt, Bestimmen, dass die Anzeigevorrichtung ausgelegt ist, um über das Übertragungsprotokoll zu kommunizieren.

## Revendications

1. Procédé, comprenant les étapes consistant à :
transmettre, par l'intermédiaire d'un ou de plusieurs dispositifs informatiques, un ensemble d'instructions à un dispositif de commande à distance (130) incluant un microphone (132) pour détecter une sortie audio provenant depuis un haut-parleur (124) couplé à un dispositif d'affichage (120) ;
recevoir une communication à partir du dispositif de commande à distance indiquant la sortie audio depuis le haut-parleur ;
transmettre un message au dispositif d'affichage pour commander la sortie audio depuis le haut-parleur en utilisant un protocole de transmission ;
transmettre une demande au dispositif de commande à distance pour déterminer si le dispositif d'affichage a traité le message ; et
déterminer que le dispositif d'affichage est configuré pour communiquer via le protocole de transmission, en réponse à la réception d'un message affirmatif provenant du dispositif de commande à distance indiquant que le dispositif d'affichage a traité avec succès le message en déterminant qu'un attribut associé à la sortie audio depuis le haut-parleur se trouve à l'intérieur d'un seuil prédéterminé.

2. Procédé selon la revendication 1, comprenant en outre une détermination que le dispositif d'affichage est configuré pour communiquer via un système de communication, dans lequel le système de communication est différent du protocole de transmission, en réponse à la réception, par l'intermédiaire des un ou plusieurs dispositifs informatiques, d'un message d'échec provenant du dispositif de commande à distance indiquant que le dispositif d'affichage n'a pas réussi à traiter le message.

3. Procédé selon la revendication 2, dans lequel, en réponse à la détermination que le dispositif d'affichage est configuré pour communiquer via le système de communication, le procédé comprend en outre les étapes consistant à :
transmettre le message au dispositif d'affichage pour commander la sortie audio depuis le haut-parleur en utilisant système de communication ;
transmettre un troisième ensemble d'instructions au dispositif de commande à distance pour confirmer que le dispositif d'affichage a traité le message en déterminant si l'attribut associé à la sortie audio depuis le haut-parleur est à l'intérieur du seuil prédéterminé ; et
recevoir un message de confirmation provenant du dispositif de commande à distance indiquant que le dispositif d'affichage a traité le message avec succès.

4. Procédé selon la revendication 2, dans lequel en réponse à la détermination que le dispositif d'affichage est configuré pour communiquer via une communication infrarouge, le procédé comprend en outre l'étape consistant à :
transmettre des communications futures au dispositif d'affichage via le système de communication.

5. Procédé selon la revendication 1, dans lequel le message pour commander la sortie audio depuis le haut-parleur est un message de mise en sourdine.

6. Procédé selon la revendication 1, dans lequel le dispositif de commande à distance est positionné à une distance prédéterminée du dispositif d'affichage.

7. Procédé selon la revendication 1, dans lequel le protocole de transmission est Consumer Electronics Control (CEC).

8. Procédé selon la revendication 1, dans lequel en réponse à la détermination que le dispositif d'affichage est configuré pour communiquer via le protocole de transmission, le procédé comprend en outre l'étape consistant à :
transmettre des communications futures au dispositif d'affichage via le protocole de transmission.

9. Système, comprenant :
une mémoire ; et
au moins un processeur couplé à la mémoire, le au moins un processeur étant configuré pour :
transmettre un ensemble d'instructions à un dispositif de commande à distance (130) incluant un microphone (132) pour détecter une sortie audio depuis un haut-parleur (124) couplé à un dispositif d'affichage (120) ;
recevoir une communication à partir du dispositif de commande à distance indiquant la sortie audio depuis le haut-parleur ;
transmettre un message au dispositif d'affichage pour commander la sortie audio depuis le haut-parleur en utilisant un protocole de transmission ;
transmettre une demande au dispositif de commande à distance pour déterminer si le dispositif d'affichage a traité le message ; et
déterminer que le dispositif d'affichage est configuré pour communiquer via le protocole de transmission, en réponse à la réception d'un message affirmatif provenant du dispositif de commande à distance indiquant que le dispositif d'affichage a traité avec succès le message en déterminant qu'un attribut associé à la sortie audio depuis le haut-parleur se trouve dans un seuil prédéterminé.

10. Système selon la revendication 9, dans lequel le au moins un processeur est en outre configuré pour déterminer que le dispositif d'affichage est configuré pour communiquer via un système de communication, dans lequel le système de communication est différent du protocole de transmission, en réponse à la réception d'un message d'échec provenant du dispositif de commande à distance indiquant que le dispositif d'affichage n'a pas réussi à traiter le message.

11. Système selon la revendication 10, dans lequel en réponse à la détermination que le dispositif d'affichage est configuré pour communiquer via le système de communication, le au moins un processeur est en outre configuré pour :
transmettre le message au dispositif d'affichage pour commander la sortie audio depuis le haut-parleur en utilisant le système de communication ;
transmettre un troisième ensemble d'instructions au dispositif de commande à distance pour confirmer que le dispositif d'affichage a traité le message en déterminant si l'attribut associé à la sortie audio depuis le haut-parleur est à l'intérieur du seuil prédéterminé ; et
recevoir un message de confirmation provenant du dispositif de commande à distance indiquant que le dispositif d'affichage a traité le message avec succès.

12. Dispositif de commande à distance (130) comprenant :
un microphone (132) ; et
un dispositif de commande (136) couplé au microphone, le dispositif de commande étant configuré pour :
commander le microphone pour détecter une sortie audio depuis un haut-parleur (124) couplé à un dispositif d'affichage (120) en réponse à la réception d'un ensemble d'instructions provenant d'un lecteur multimédia numérique (100) couplé au dispositif d'affichage ;
transmettre une communication au lecteur multimédia numérique indiquant la détection de la sortie audio depuis le haut-parleur ;
recevoir, du lecteur multimédia numérique, une demande pour déterminer si le dispositif d'affichage a traité un message transmis au dispositif d'affichage ;
déterminer si un attribut associé à la sortie audio depuis le haut-parleur se trouve à l'intérieur d'un seuil prédéterminé sur la base d'une sortie audio depuis le haut-parleur détectée par le microphone ; et
transmettre un message affirmatif au lecteur multimédia numérique, en réponse à la détermination que l'attribut associé à la sortie audio depuis le haut-parleur est à l'intérieur du seuil prédéterminé.

13. Dispositif de commande à distance selon la revendication 12, le dispositif de commande étant en outre configuré pour transmettre un second message associé à un contenu vidéo ou audio au lecteur multimédia numérique.

14. Dispositif de commande à distance selon la revendication 12, comprenant en outre un élément de fréquence radio couplé au dispositif de commande, dans lequel le dispositif de commande communique avec le lecteur multimédia numérique en utilisant l'élément de fréquence radio.

15. Support lisible non transitoire par ordinateur sur lequel sont stockées des instructions qui, lorsqu'elles sont exécutées par au moins un dispositif informatique, amènent le au moins un dispositif informatique à exécuter des opérations comprenant :
transmettre un ensemble d'instructions à un dispositif de commande à distance (130) incluant un microphone (132) pour détecter une sortie audio depuis un haut-parleur (124) couplé à un dispositif d'affichage (120) ;
recevoir une communication à partir du dispositif de commande à distance indiquant la sortie audio depuis le haut-parleur ;
transmettre un message au dispositif d'affichage pour commander la sortie audio depuis le haut-parleur en utilisant un protocole de transmission ;
transmettre une demande au dispositif de commande à distance pour déterminer si le dispositif d'affichage a traité le message ; et
déterminer que le dispositif d'affichage est configuré pour communiquer via le protocole de transmission, en réponse à la réception d'un message affirmatif provenant du dispositif de commande à distance indiquant que le dispositif d'affichage a traité avec succès le message en déterminant qu'un attribut associé à la sortie audio depuis le haut-parleur se trouve à l'intérieur d'un seuil prédéterminé.
